# EUROPÄISCHE PATENTSCHRIFT

(11) **EP 2 104 597 B1**
(45) Veröffentlichungstag und Bekanntmachung des Hinweises auf die Patenterteilung: **18.04.2018**
(21) Anmeldenummer: 07847164.6
(22) Anmeldetag: 14.11.2007
(51) Int. Cl.: B23B 49/00, B25D 17/00, B25H 1/00, G01S 7/00, G01S 13/08, G01V 3/15, G01S 13/02, B25F 5/00

(54) **ELEKTROWERKZEUG**
POWER TOOL
OUTIL ÉLECTRIQUE

(30) Priorität: 27.12.2006 DE 102006061581
(43) Veröffentlichungstag der Anmeldung: 30.09.2009
(73) Patentinhaber: Robert Bosch GmbH, 70442 Stuttgart (DE)
(72) Erfinder: KRAPF, Reiner, 72770 Reutlingen (DE); STREICHFUSS, Martin, 70771 Leinfelden (DE); MAHLER, Michael, 70771 Leinfelden-echterdingen (DE); HENKE, Thilo, 70563 Stuttgart (DE); STRASSER, Andreas, 73635 Rudersberg (DE)
(86) Internationale Anmeldenummer: PCT/EP2007/062330
(87) Internationale Veröffentlichungsnummer: WO 2008/080686

(56) Entgegenhaltungen:
- EP-A- 1 197 762
- DE-A1-102004 007 315
- DE-A1-102004 017 939
- US-A- 5 541 605
- US-A1- 2006 076 385

## Beschreibung

### Stand der Technik

Die Erfindung geht aus von einer Elektrowerkzeug nach dem Oberbegriff des Anspruchs 1.
Es isL eine Vorrichtung für ein Eleletrowerkzeug bekannt, die dazu dient, einen Arbeitstortschritt bei der Bearbeitung eines Werkstücks zu erfassen.

Aus der DE 10 2004 017 939 A1 ist eine Geführte Werkzeugmaschine sowie Verfahren zum Betreiben einer geführten Werkzeugmaschine, bekannt, bei der wenigstens ein während des Arbeitsprozesses an der Werkzeugmaschine erfasstes Messsignal zur Ableitung einer in Arbeitsrichtung des Einsatzwerkzeugs liegenden Eigenschaft eines Bearbeitungskörpers ausgewertet und die Werkzeugmaschine abhängig von der Eigenschaft betrieben wird.

Die EP 1 197 762 A2, die ein Elektrowerkzeug mit den Merkmalen des Oberbegriffs von Anspruch 1 offenbart, offenbart einen untergrundergründenden Radardetektor, mit zumindest drei mit ihren Positionen zusammen eine Fläche aufspannenden Antennen einer Antennenanordnung. Die Antennen sind jeweils einzeln schaltbar mit zumindest einer Sende/Empfangseinheit verbunden. Die Antennenanordnung der EP 1 197 762 A2 ist für elektromagnetische Wellen im Hochfrequenzbereich vorgesehen. Ein spezieller Frequenzbereich ist in der EP 1 197 762 A2 nicht angegeben. Ein mit dem Radardetektor der EP 1 197 762 A2 verbundenes Handwerkzeuggerät in Form einer Bohrmaschine mit einem sich durch die Antennenanordnung hindurch erstreckenden Werkzeug beinhaltet eine Geräteelektronik, die mit dem Radardetektor bidirektional verbunden ist.
Aus der US 5,541,605 ist ein scannendes Nahbereichradar zur Detektion naheliegender Objekte bekannt. Das System ist als UWB Radarsystem ausgebildet und ermöglicht den Betrieb über einen Bereich von 2 MHz bis 10 GHz bis 15 GHz. Die Antennen der US 5,541,605 sind dabei als Monopolantennen realisiert und linear polarisiert. Die Messergebnisse des Systems der US 5,541,605 werden einem Anwender durch ein Display der Vorrichtung angezeigt.

### Vorteile der Erfindung

Die Erfindung stellt ein Elektrowerkzeug nach dem unabhängigen Anspruch 1 bereit. Es wird erfindungsgemäß vorgeschlagen, dass die Sensoreinheit dazu vorgesehen ist, eine Kenngröße für eine einem Bediener verborgene Übergangsstelle des Werkstücks zu erfassen. Dadurch können ein hoher Bedienkomfort und eine hohe Sicherheit bei der Bearbeitung des Werkstücks erreicht werden. Unter einer "Übergangsstelle" kann insbesondere eine Stelle des Werkstücks verstanden werden, an welcher ein das Werkstück bildendes Werkstücksmaterial in ein weiteres, von diesem Werkstücksmaterial unterschiedliches Material übergeht. Unter einer "Übergangsstelle" des Werkstücks kann insbesondere auch eine "Schnittstelle" des Werkstücks verstanden werden. Die Sensoreinheit weist vorzugsweise zumindest ein Sendemittel auf, das zum Senden eines Erfassungssignals in das zu bearbeitende Werkstück vorgesehen ist. Die von dem Werkstück abhängende Kenngröße wird insbesondere anhand des reflektierten Erfassungssignals gewonnen, welches mittels eines Empfangsmittels der Sensoreinheit empfangen wird. Die Kopplungseinheit dient vorteilhafterweise zumindest zur Herstellung einer Datenverbindung zwischen der Sensoreinheit und einer im Elektrowerkzeuggrundkörper integrierten Einheit, insbesondere einer im Elektrowerkzeuggrundkörper integrierten Steuereinheit. Hierzu kann diese Datenverbindung mittels eines Drahtanschlusses und/oder mittels eines drahtlosen Anschlusses hergestellt werden. Hierbei können eine Infrarot-, eine Bluetooth-Verbindung und/oder weitere, dem Fachmann als sinnvoll erscheinende drahtlose Verbindungen eingesetzt werden. Die Kopplungseinheit ist ferner vorzugsweise zur mechanischen Kopplung der Sensoreinheit am Elektrowerkzeuggrundkörper vorgesehen. Beispielsweise kann die Kopplungseinheit eine Befestigungsschnittstelle der Sensoreinheit aufweisen, die zu einer lösbaren Befestigung der Sensoreinheit am Elektrowerkzeuggrundkörper, insbesondere einem Elektrowerkzeuggehäuse, vorgesehen ist.

Eine besonders komfortable Anwendung des Elektrowerkzeugs in Kombination mit der Sensoreinheit wird erreicht, weil die Sensoreinheit im Elektrowerkzeuggrundkörper angeordnet ist. Dadurch kann der Einsatz eines externen Geräts vermieden werden.
Vorteilhafterweise bildet die Sensoreinheit zumindest einen Teil einer Elektrowerkzeugsicherheitseinheit, die dazu vorgesehen ist, in Abhängigkeit von einer von der verborgenen Übergangsstelle des Werkstücks abhängenden Kenngröße diese Übergangsstelle zu berücksichtigen. Anhand dieser Kenngröße kann die Elektrowerkzeugsicherheitseinheit Maßnahmen zur Vermeidung einer auf Grund der Übergangsstelle drohenden Gefahr treffen.

Es wird außerdem vorzugsweise vorgeschlagen, dass die Sensoreinheit ein Sensormittel zur Erfassung einer Kenngröße aufweist, die von einer dem Bediener verborgenen Rückseite des Werkstücks abhängt. Dadurch kann bei einer Bearbeitung die Rückseite des Werkstücks vorteilhaft berücksichtigt werden. Besonders vorteilhaft kann ein Durchbruch des Werkstücks bei dessen Bearbeitung vermieden werden. Die Rückseite stellt hierbei eine Übergangsstelle des Werkstücks zur das Werkstück umgebenden Luft dar. Die Kenngröße wird vorzugsweise anhand eines an der Rückseite reflektierten Erfassungssignals der Sensoreinheit gewonnen. Unter der "Rückseite" des Werkstücks kann insbesondere eine Seite des Werkstücks verstanden werden, welche einer bei einer Bearbeitung des Werkstücks dem Bediener zugewandten Vorderseite gegenüber und insbesondere parallel zur Vorderseite angeordnet ist.

In einer vorteilhaften Weiterbildung der Erfindung wird vorgeschlagen, dass die Sensoreinheit ein Sensormittel zur Erfassung einer Kenngröße aufweist, die von einem im Werkstück angeordneten Fremdkörper abhängt. Hierdurch können eine Beschädigung des im Werkstück angeordneten Fremdkörpers und daraus weiter entstehende Schäden am Werkstück vermieden werden. Unter einem "Fremdkörper" kann insbesondere ein Körper aus einem Material verstanden werden, welches vom das Werkstück bildenden Werkstückmaterial verschieden ist. Das Sensormittel ist hierbei vorzugsweise als Ortungssensor ausgebildet.

In einer bevorzugten Ausbildung der Erfindung wird vorgeschlagen, dass die Elektrowerkzeugvorrichtung eine Auswerteeinheit aufweist, die zur Ermittlung einer von der Übergangsstelle abhängenden Strecke vorgesehen ist, wodurch eine einfache Anwendung der Elektrowerkzeugvorrichtung erreicht werden kann. Hierzu ist ein von der Sensoreinheit gesendetes Erfassungssignal vorteilhafterweise als Entfernungssignal ausgebildet, das zur Ermittlung einer Entfernung dient. Das Entfernungssignal dient insbesondere zur Ermittlung des Abstands der Sensoreinheit zur Übergangsstelle. Wird zusätzlich aus einem Entfernungssignal der Abstand der Sensoreinheit zur Vorderseite des Werkstücks ermittelt, kann ab einem Einführen eines Werkzeugs in das Werkstück eine bis zu einem Erreichen der Übergangsstelle durch das Werkzeug verbleibende Strecke laufend ermittelt werden.

Eine vorteilhafte Unterscheidung zwischen verschiedenen Typen von Übergängen kann erreicht werden, wenn die Sensoreinheit ein Sensormittel aufweist, das zur Materialerkennung vorgesehen ist. Hierzu können verschiedene, dem Fachmann als sinnvoll erscheinende Auswertungsmethoden zur Auswertung eines von der Sensoreinheit erzeugten Signals eingesetzt werden, wie z.B. eine spektrale Auswertung, eine Phasenauswertung usw. Erfindungsgemäß weist die Sensoreinheit eine Signaleinheit auf, die zur Erzeugung eines Hochfrequenzsignals, insbesondere eines Radarsignals, vorgesehen ist. Durch die hohe Frequenz kann ein Entfernungssensor leicht in beispielsweise eine Bohrmaschine integriert und klein ausgeführt werden. Hierfür weist das Entfernungssignal vorteilhafterweise eine Frequenz über 1 GHz auf, wodurch seine Antenne klein ausfallen kann. Erfindungsgemäß ist die Signaleinheit für einen ultrabreitbandigen Betrieb, vorgesehen. Unter einer für einen Ultrabreitbandbetrieb vorgesehenen Signaleinheit kann insbesondere eine Signaleinheit verstanden werden, mittels der ein ultrabreitbandiges Signal erzeugt werden kann. Unter einem "ultrabreitbandigen Signal" soll insbesondere ein Signal verstanden werden, welches in seinem Frequenzspektrum eine Frequenzbandbreite von zumindest 500 MHz aufweist.

Ferner wird erfindungsgemäß vorgeschlagen, dass die Sensoreinheit eine Signaleinheit aufweist, die dazu vorgesehen ist, ein in einer Ebene polarisiertes Erfassungssignal abzustrahlen, was sich insbesondere bei der Bearbeitung von anisotropen Werkstücken eignet. Unter einer "Ebene" kann in diesem Zusammenhang insbesondere eine Polarisationsebene einer erzeugten Signalwelle, insbesondere einer elektromagnetischen Welle, verstanden werden.

In diesem Zusammenhang kann eine Messpräzision weiter erhöht werden, wenn die Sensoreinheit eine Signaleinheit aufweist, die dazu vorgesehen ist, ein Erfassungssignal in zumindest zwei unterschiedlichen Ebenen abzustrahlen.

Ein besonders hoher Bedienkomfort und eine hohe Sicherheit bei der Bearbeitung eines Werkstücks können erreicht werden, wenn die Elektrowerkzeugvorrichtung eine Steuereinheit aufweist, die dazu vorgesehen ist, zumindest einen Elektrowerkzeugbetriebsparameter in Abhängigkeit einer von der Sensoreinheit erfassten Kenngröße zumindest teilautomatisch zu steuern. Die Sicherheit und die Bedienerfreundlichkeit können weiter erhöht werden, wenn das Steuern des Elektrowerkzeugbetriebsparameters anhand der erfassten Kenngröße vollautomatisch und/oder während der Bearbeitung des Werkstücks erfolgt. Insbesondere kann die Steuereinheit zur Veränderung des Elektrowerkzeugbetriebsparameters unter Beibehaltung eines Arbeitsgangs am Werkstück in Abhängigkeit von der Kenngröße vorgesehen sein. Der Elektrowerkzeugbetriebsparameter ist vorzugsweise ein Parameter einer Antriebseinheit eines Elektrowerkzeugs, insbesondere eines Elektromotors. Vorzugsweise ist er ein Parameter aus der Gruppe Drehzahl, Laufgeschwindigkeit, Schlagstärke, Schlagfrequenz, Pendelhub, maximales Drehmoment und/oder Laufrichtung. Unter "vorgesehen" kann insbesondere "ausgelegt" oder "programmiert" verstanden werden. Hierzu kann die Steuereinheit eine Prozessoreinheit und/oder eine Controllereinheit und/oder eine Speichereinheit zur Speicherung von Programmen und/oder Betriebsdaten aufweisen.
Eine einfache Bedienung kann erreicht werden, wenn die Elektrowerkzeugvorrichtung eine akustische und/oder optische Signalausgabeeinheit aufweist, die dazu vorgesehen ist, einem Bediener eine von der Übergangsstelle abhängende Information auszugeben.
Ein besonders präzises und sicheres Arbeiten kann erreicht werden, wenn die Signalausgabeeinheit einen Betriebsmodus aufweist, in welchem eine Information über eine von der Übergangsstelle abhängende Strecke ausgegeben wird. Insbesondere kann eine bis zum Erreichen des Übergangs verbleibende Strecke bei einem Bearbeitungsprozess des Werkstücks angezeigt werden.

Ferner wird vorzugsweise vorgeschlagen, dass die Elektrowerkzeugvorrichtung eine Eingabeeinheit zum Eingeben einer Information für einen Elektrowerkzeugbetriebsparameter durch den Bediener aufweist, wodurch eine Flexibilität in der Anwendung der Elektrowerkzeugvorrichtung erreicht werden kann.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: eine Bohrmaschine mit einer Sensoreinheit zur Detektion eines Fremdobjekts in einer Wand,
- Fig. 2a bis 2c: schematische Darstellungen der Bohrmaschine, der Wand und einer Ausgabeeinheit der Bohrmaschine in verschiedenen Anwendungssituationen,
- Fig. 3a bis 3d: die Bohrmaschine in einer Draufsicht mit verschiedenen Ausführungen der Sensoreinheit,
- Fig. 4: eine interne Schaltung der Sensoreinheit,
- Fig. 5: eine nicht erfinderische Bohrmaschine mit einer Vorsatzeinheit, in welcher eine Sensoreinheit angeordnet ist und
- Fig. 6: die Bohrmaschine aus Figur 5 mit einer Einrichtung zur drahtlosen Datenverbindung der Sensoreinheit.

### Beschreibung der Ausführungsbeispiele

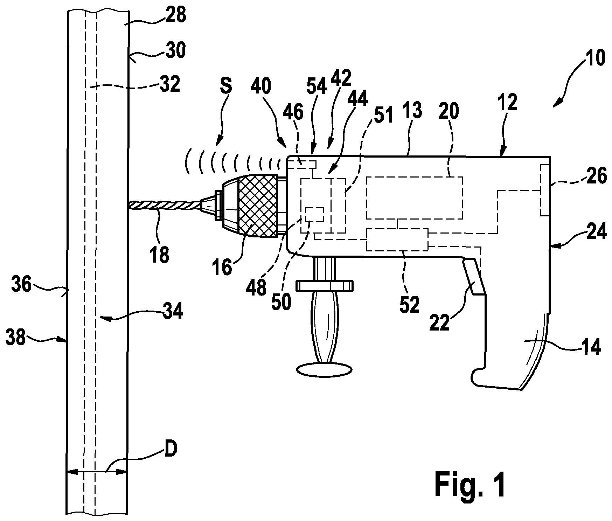

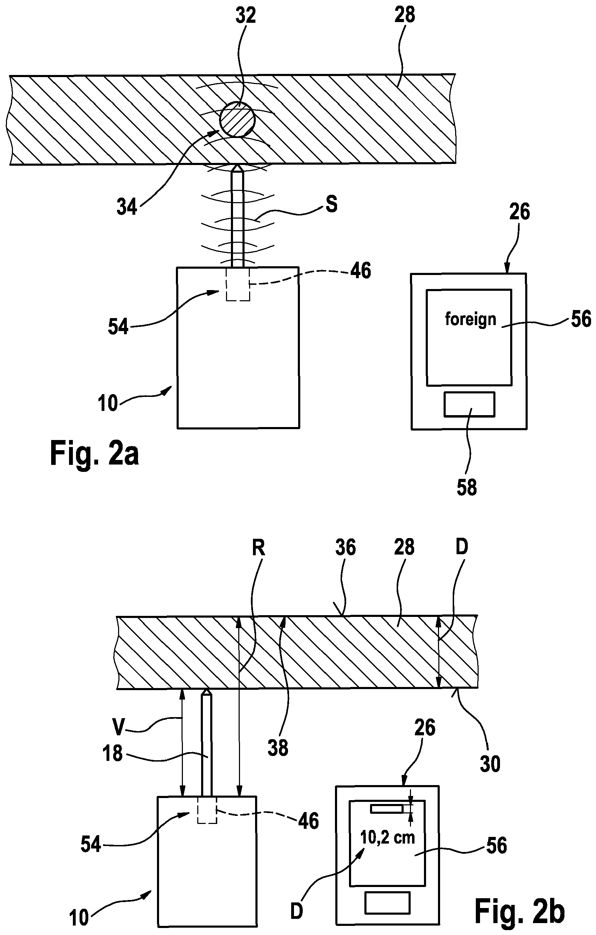

Figur 1 zeigt ein als Bohrmaschine ausgebildetes Elektrowerkzeug 10. Dieses weist einen als Gehäuse ausgeführten Elektrowerkzeuggrundkörper 12 mit einem Motorgehäuse 13 und einem Handgriff 14 auf. Das Elektrowerkzeug 10 umfasst ferner eine Werkzeugaufnahme 16, in welcher ein als Bohrer ausgebildetes Werkzeug 18 aufgenommen ist. Im Motorgehäuse 13 ist ein Elektromotor 20 angeordnet. Zum Einschalten und Stoppen eines Betriebs des Elektromotors 20 ist ein von einem Bediener betätigbarer Schalter 22 vorgesehen. An einer bei einem Halten des Elektrowerkzeugs 10 dem Bediener zugewandten Seite 24 des Elektrowerkzeuggrundkörpers 12 ist eine Signalausgabeeinheit 26 angeordnet, die zur Ausgabe einer Information an einen Bediener auf optische und/oder akustische Weise vorgesehen ist. Dies ist anhand von den Figuren 2a bis 2c näher dargestellt.

Das Elektrowerkzeug 10 ist vor einem als Wand ausgebildeten Werkstück 28 angeordnet. Hierbei liegt eine Spitze des Werkzeugs 18 an der dem Bediener zugewandten Vorderseite 30 des Werkstücks 28 an. Das Werkstück 28 weist eine Werkstücksdicke D auf, die kleiner ist als die Länge des Werkzeugs 18. Außerdem verläuft ein als Wasserleitung ausgebildeter Fremdkörper 32 innerhalb des Werkstücks 28. Der Fremdkörper 32 bildet eine dem Bediener verborgene Übergangsstelle 34, an welcher das das Werkstück 28 bildende Material in das den Fremdkörper 32 bildende Material übergeht. Die der Vorderseite 30 gegenüberliegende Rückseite 36 des Werkstücks 28 bildet eine weitere, bei einer Bearbeitung dem Bediener verborgene Übergangsstelle 38, an welcher das das Werkstück 28 bildende Material in die das Werkstück 28 umgebende Luft übergeht.

Bei der Bearbeitung des Werkstücks 28 besteht die Gefahr, dass das Werkzeug 18 die Übergangsstelle 34 erreicht und dabei in Berührung mit dem Fremdkörper 32 kommt, wodurch Beschädigungen des Fremdkörpers 32 und weitere Schäden am Werkstück 28 entstehen können. Erreicht das Werkzeug 18 die Übergangsstelle 38, kann das Werkzeug 18 das Werkstück 28 durchbrechen. Um solche Beschädigungen zu vermeiden, ist das Elektrowerkzeug 10 mit einer Elektrowerkzeugvorrichtung 40 versehen, die dazu dient, bei der Bearbeitung des Werkstücks 28 die Übergangsstellen 34, 38 zu berücksichtigen.

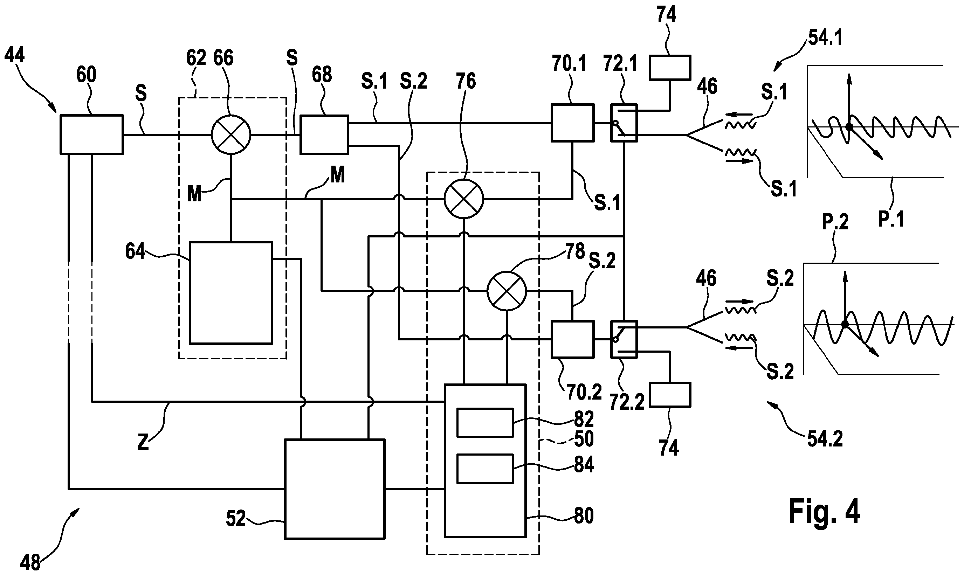

Die Elektrowerkzeugvorrichtung 40 weist eine Sensoreinheit 42 auf, die zur Erfassung von Kenngrößen vorgesehen ist, welche vom zu bearbeitenden Werkstück 28 abhängen. Hierzu weist die Sensoreinheit 42 eine Signaleinheit 44 auf, die zum Erzeugen eines als Radarsignal ausgebildeten Erfassungssignals S vorgesehen ist. Die Signaleinheit 44 umfasst ein als Antenne ausgebildetes Sende- und Empfangsmittel 46 zum Senden des Erfassungssignals S und zum Empfangen des reflektierten Erfassungssignals S. Zum Senden bzw. Empfangen des Erfassungssignals S können auch ein Sendemittel und ein getrenntes Empfangsmittel vorgesehen sein. Die Signaleinheit 44 ist anhand von Figur 4 näher beschrieben.

Zum Bearbeiten des Erfassungssignals S, insbesondere zur Bereitstellung des Erfassungssignals S zu einem Senden und zur Bearbeitung bzw. zur Auswertung des reflektierten Erfassungssignals S nach dessen Empfang, ist eine Signalbearbeitungseinheit 48 der Signaleinheit 44 vorgesehen. Insbesondere weist die Signalbearbeitungseinheit 48 eine Auswerteeinheit 50 zum Auswerten des reflektierten Erfassungssignals S auf. Die Sensoreinheit 42 ist im Elektrowerkzeuggrundkörper 12 integriert. Somit ist die Sensoreinheit 42 über eine schematisch dargestellte Kopplungseinheit 51, die nicht näher gezeigte Befestigungsmittel aufweist, an internen Komponenten des Elektrowerkzeuggrundkörpers 12 befestigt. Die Elektrowerkzeugvorrichtung 40 weist ferner eine Steuereinheit 52 auf, die mit dem Elektromotor 20, dem Schalter 22, der Signalausgabeeinheit 26 und der Signaleinheit 44 in Wirkverbindung steht.

Mittels der Sensoreinheit 42 der Elektrowerkzeugvorrichtung 40 können verschiedene Kenngrößen des Werkstücks 28 erfasst werden, die mit den Übergangsstellen 34, 38 zusammenhängen. Hierzu weist die Sensoreinheit 42 ein Sensormittel 54 auf, das von dem Sende- und Empfangsmittel 46 und der Signalbearbeitungseinheit 48 gebildet ist und das zur Erfassung von Kenngrößen dient, die vom Fremdkörper 32 und von der verborgenen Rückseite 36 des Werkstücks 28 abhängen. Dies wird anhand von den Figuren 2a bis 2c näher beschrieben.

Die Sensoreinheit 42 mit dem Sensormittel 54 kann ein Vorhandensein des Fremdkörpers 32 erfassen. Dies ist anhand von Figur 2a erläutert. Hierbei dient das Sensormittel 54 als Ortungssensor, welcher auf bekannte Weise anhand des an dem Fremdkörper 32 reflektierten Erfassungssignals S den Fremdkörper 32 detektiert. Diese Erfassungstechnik ist bekannt und wird im Rahmen dieser Beschreibung nicht näher erläutert. Wird mittels der Auswerteeinheit 50 das Vorhandensein des Fremdkörpers 32 detektiert, so wird über die Steuereinheit 52 eine Information mittels der Signalausgabeeinheit 26, die eine als LCD-Bildschirm ausgebildete Anzeigeeinheit 56 und eine akustische Ausgabeeinheit 58 aufweist, auf optische Weise mittels einer angezeigten Nachricht und/oder akustisch mittels eines Warnungstons dem Bediener ausgegeben. Alternativ oder zusätzlich zum LCD-Bildschirm sind weitere Ausgestaltungen der Anzeigeeinheit 56 denkbar, wie z.B. eine LED-Anordnung, in welcher LED-Einheiten aufgedruckte Symbole beleuchten und/oder durch ihre Anordnung Symbole bilden.

In einem Betriebsmodus wird der Elektromotor 20 anhand der Detektion des Fremdkörpers 32 durch die Steuereinheit 52 gesteuert. Erfolgt das Detektieren des Fremdkörpers 32, bevor ein Bohrvorgang gestartet wird, so kann die Steuereinheit 52 bewirken, dass bei der Betätigung des Schalters 22 ein Starten des Elektromotors 20 verhindert wird. Erfolgt die Detektion des Fremdkörpers 32 während der Bearbeitung, kann durch die Steuereinheit 52 der Elektromotor 20 gestoppt werden. Alternativ kann ein Elektrowerkzeugbetriebsparameter, und zwar insbesondere die Drehzahl des Elektromotors 20, an die Gefahrensituation automatisch angepasst werden, indem diese Drehzahl vermindert wird.

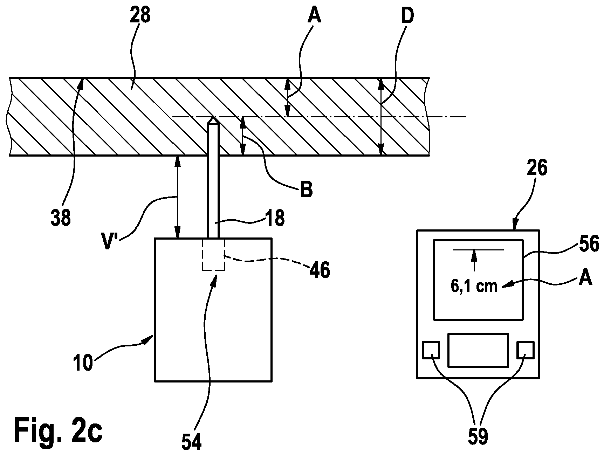

Die Sensoreinheit 42 mit dem Sensormittel 54 kann ferner als eine von der Übergangsstelle 38 abhängende Kenngröße die Werkstücksdicke D erfassen. Dies ist in Figur 2b dargestellt. Der Übersichtlichkeit halber wird in Figur 2b sowie in der nachfolgenden Figur 2c auf die Darstellung des Erfassungssignals S verzichtet. In diesem Modus dient das Sensormittel 54 als Entfernungssensor, welcher z.B. anhand der Laufzeit des frequenzmodulierten Erfassungssignals S die von diesem Erfassungssignal S zurückgelegte Strecke ermitteln kann. Hierbei ist das Erfassungssignal S als Entfernungssignal zur Erfassung einer vom Werkstück 28 abhängenden Entfernung ausgebildet. Es wird angenommen, dass der Bediener die Spitze des Werkzeugs 18 an die Vorderseite 30 angelegt hat. Über das Erfassungssignal S, das an dieser Vorderseite 30 reflektiert wird, kann eine Strecke V zwischen der Sensoreinheit 42 und der Vorderseite 30 durch die Auswerteeinheit 50 ermittelt werden. Aus der Laufzeit des an der Rückseite 36 reflektierten Erfassungssignals S kann eine Strecke R zwischen der Sensoreinheit 42 und der Übergangsstelle 38 durch die Auswerteeinheit 50 ermittelt werden. Durch Differenzbildung kann die gewünschte Werkstücksdicke D bestimmt werden. Diese kann anschließend dem Bediener durch die Signalausgabeeinheit 26 millimetergenau angezeigt werden.

Während des Bearbeitungsprozesses kann als eine von der Übergangsstelle 38 abhängende Kenngröße eine bis zum Erreichen der Übergangsstelle 38 verbleibende Strecke A laufend ermittelt werden. Dies ist anhand von Figur 2c erläutert. Hierbei wird mittels des bekannten Prinzips der Bohrtiefenmessung durch die Ermittlung einer Strecke V' zwischen der Sensoreinheit 42 und der Vorderseite 30 eine von dem Werkzeug 18 erreichte Bohrtiefe B ermittelt. Durch Differenzbildung mit der bekannten Werkstücksdicke D ergibt sich die gewollte verbleibende Strecke A. Diese wird über die Anzeigeeinheit 56 dem Bediener laufend übermittelt. Überschreitet die tatsächliche Bohrtiefe B einen voreingestellten Wert oder unterschreitet die Strecke A einen voreingestellten Wert werden von der Steuereinheit 52 Sicherheitsmaßnahmen getroffen. So kann der Bediener über die Signalausgabeeinheit 26 über den drohenden Durchbruch des Werkstücks 28 optisch und/oder akustisch informiert werden. Die Steuereinheit 52 kann ferner einen Elektrowerkzeugbetriebsparameter an diese Gefahrensituation anpassen, indem z.B. die Drehzahl des Elektromotors 20 verringert wird bzw. der Elektromotor 20 gestoppt wird.

Zum Starten der Ermittlung der Werkstücksdicke D umfasst die Signalausgabeeinheit 26 eine mit Knöpfen ausgebildete Eingabeeinheit 59. Bei einem gleichzeitigen Drücken der Knöpfe wird die Werkstücksdicke D ermittelt und angezeigt. Die Eingabeeinheit 59 kann auch zum Einstellen einer gewünschten Bohrtiefe dienen. Alternativ kann die Ermittlung der Werkstücksdicke D automatisch durch das Drücken des Schalters 22 erfolgen.

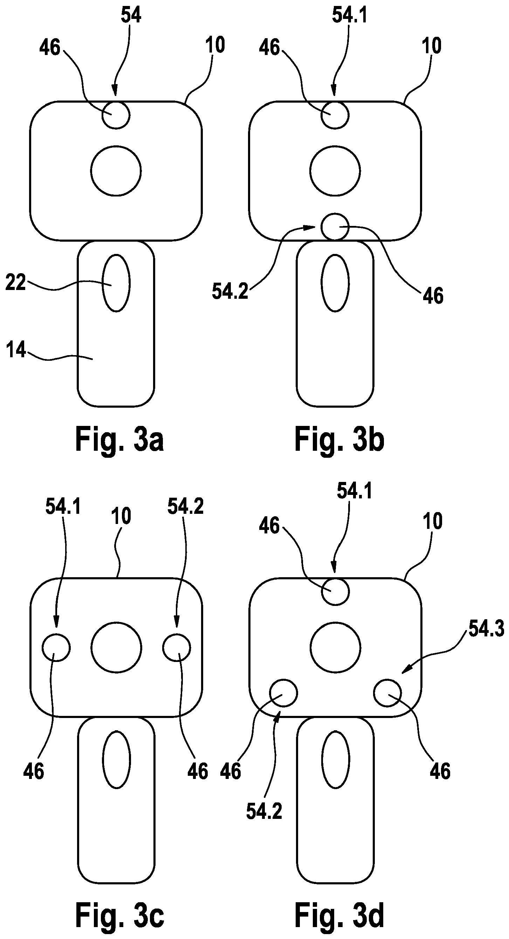

In den Figuren 3a - 3d sind vier verschiedene Ausführungen der Sensoreinheit 42 dargestellt. Hierbei ist das Elektrowerkzeug 10 in einer schematischen Ansicht von vorn gezeigt. Das Elektrowerkzeug 10 umfasst in jedem Ausführungsbeispiel die Sensoreinheit 42 mit jeweils einem oder mehreren Sensormitteln 54, wobei ein Sensormittel 54 jeweils von der Signalbearbeitungseinheit 48 und einem Sende- und Empfangsmittel 46 gebildet ist. Die Sensoreinheit 42 in Figur 3a, die der Ausführung der vorhergehenden Figuren 1 und 2a-2c entspricht, umfasst lediglich ein Sensormittel 54. Durch die Verwendung von zwei Sensormitteln 54.1, 54.2 wie in den Ausführungen gemäß den Figuren 3b, 3c kann ein Verkippen des Elektrowerkzeugs 10 in einer oder quer zu einer Griffrichtung relativ zum Werkstück 28 durch einen unterschiedlichen Abstand der Sensormittel 54.1, 54.2 vom Werkstück 28 erkannt werden. Bei drei Sensormitteln 54.1, 54.2, 54.3 wie in Figur 3d oder mehr Sensoren kann ein Verkippen des Elektrowerkzeugs 10 längs und quer zur Griffrichtung erkannt werden und einem Bediener ein exakt senkrechtes Bohren in das Werkstück 28 erleichtert werden.

In Figur 4 ist eine interne Schaltung der Signaleinheit 44 der Sensoreinheit 42 dargestellt, und zwar beispielhaft in der in Figur 3b gezeigten Ausführung mit zwei Sensormitteln 54.1, 54.2. Die Signaleinheit 44 umfasst die Signalbearbeitungseinheit 48 und die Sende- und Empfangsmittel 46, wobei die Signalbearbeitungseinheit 48 jeweils mit einem Sende- und Empfangsmittel 46 ein Sensormittel 54.1 bzw. 54.2 bildet.

Die Signalbearbeitungseinheit 48 weist eine Signalerzeugungseinheit 60 auf, die das Erfassungssignal S erzeugt. Das Erfassungssignal S wird anschließend in einer Modulationseinheit 62 moduliert, die ein Signalerzeugungsmittel 64 zur Erzeugung eines Modulationssignals M und eine Mischeinheit 66 zur Mischung des Erfassungssignals S mit dem Modulationssignal M aufweist. Das Erfassungssignal S kann unter verschiedenen Formen abgestrahlt werden. Es kann die Form eines Impulses aufweisen, kann als FMCW-Signal (frequency modulated continuous wave) oder als Pseudo-Noise-Signal (oder Pseudorauschfolge) ausgebildet sein. Weitere, dem Fachmann als sinnvoll erscheinende Abstrahlungsformen von Mikrowellensignalen sind jedoch denkbar. Insbesondere ist das Erfassungssignal S ein breitbandiges Signal, welches eine Bandbreite aufweist, die größer als 500 MHz ist.

Das modulierte Erfassungssignal S wird anschließend auf einen Signalteiler 68 gegeben, in welchem es in zwei Erfassungssignale S.1 und S.2 aufgeteilt wird. Nach dem Teilen weisen die Erfassungssignale S.1, S.2 eine im Wesentlichen gleiche Signalleistung auf, die durch die halbe Leistung des Erfassungssignals S gegeben ist. Eine alternative Aufteilung der Signalleistung des Erfassungssignals S auf die Erfassungssignale S.1, S.2 ist denkbar. Danach werden die Erfassungssignale S.1, S.2 jeweils über eine Signaltrennungseinheit 70.1 bzw. 70.2 auf eine Schaltvorrichtung 72.1 bzw. 72.2 gegeben. Durch die Schaltvorrichtung 72.1 bzw. 72.2, welche von der Steuereinheit 52 steuerbar ist, kann das Erfassungssignal S.1 bzw. S.2 entweder auf eine Referenzschaltung 74 zur Kalibrierung der Sensoreinheit 42 oder auf das Sende- und Empfangsmittel 46 zur Abstrahlung gegeben werden. Durch diese Referenzschaltung 74 können vorteilhaft störende Effekte, wie z.B. Temperaturänderungen, herausgerechnet werden und damit kann eine hohe Präzision erreicht werden, ohne dass die Sensoreinheit 42 durch den Bediener über kurze Zeitintervalle kalibriert werden muss.

Die von den Sensormitteln 54.1, 54.2 in Form von Radarwellen gesendeten Erfassungssignale S.1, S.2 weisen unterschiedliche Polarisationsebenen P.1 bzw. P.2 auf und wechselwirken somit mit anisotropen Werkstücken unterschiedlich stark. Die Polarisationsebenen P.1, P.2 stehen senkrecht zueinander. Sie können jedoch einen beliebigen Winkel bilden. Die Sendeverfahren in den Polarisationsebenen P.1, P.2 können gleichzeitig oder nacheinander erfolgen. Das Senden in grundsätzlich nur einer Polarisationsebene ist ebenfalls denkbar. Das Senden und das Empfangen der Erfassungssignale S.1 und S.2 können nacheinander erfolgen. Bearbeitungszeit und Kosten können eingespart werden, wenn ein simultanes Senden und Empfangen der Erfassungssignale S.1, S.2 erfolgt. Es kann ferner eines der Erfassungssignale S.1, S.2 relativ zum anderen Erfassungssignal S.2 bzw. S.1 eine Phasenverschiebung aufweisen.

Die Erfassungssignale S.1, S.2 werden nach einer Reflexion im Werkstück 28, d.h. an der Vorderseite 30, am Fremdkörper 32 oder an der Rückseite 36, von den Sende- und Empfangsmitteln 46 empfangen. Die empfangenen Erfassungssignale S.1, S.2 werden jeweils in der Signaltrennungseinheit 70.1 bzw. 70.2, die z.B. als Zirkulator, Koppler, Schalter usw. ausgebildet sein kann, von den zu sendenden Erfassungssignalen S.1, S.2 getrennt und auf die Auswerteeinheit 50 gegeben. Die Auswerteeinheit 50 weist zwei Verarbeitungseinheiten 76, 78 zur Verarbeitung der empfangenen Erfassungssignale S.1, S.2 auf, die z.B. als Demodulationseinheiten zur Demodulation der Erfassungssignale S.1, S.2 ausgebildet sind. Die Verarbeitungseinheiten 76, 78 sind mit der Modulationseinheit 62 verbunden. Auf die Verarbeitungseinheiten 76, 78 wird über eine Leitung das Modulationssignal M oder ein Samplesignal der Signalerzeugungseinheit 60, das zur Erzeugung des Erfassungssignals dient, gegeben. Nach der Verarbeitung bzw. Demodulation werden die Erfassungssignale S.1, S.2 auf eine Signalverarbeitungsvorrichtung 80 gegeben. Diese umfasst einen Analog-Digital-Wandler 82 und eine Datenverarbeitungseinheit 84, in welcher z.B. eine spektrale Analyse, eine Laufzeitauswertung, eine Phasenanalyse usw. der digitalisierten Erfassungssignale S.1, S.2 erfolgt. Die Datenverarbeitungseinheit 84 ist z.B. als DSP-Einheit (Digital Signal Processing oder digitale Signalverarbeitung) ausgebildet. Vor der digitalen Umwandlung kann optional ein Mittelwert der Erfassungssignale S.1, S.2 gebildet werden, wodurch eine Erhöhung des Signal-Rausch-Verhältnisses erreicht werden kann.

Wird für das Erfassungssignal S eine PN-Folge erzeugt, kann optional in der Signalverarbeitungsvorrichtung 80 eine Korrelation der empfangenen Erfassungssignale S.1, S.2 mit einem Referenzsignal Z durchgeführt werden. Das Korrelationsergebnis wird anschließend abgetastet und analog/digital gewandelt. Vor dieser Wandlung kann ebenfalls ein Mittelwert der empfangenen Erfassungssignale S.1, S.2 und/oder eine Filterung von hohen Frequenzanteilen durchgeführt werden. Als Referenzsignal Z wird in diesem Ausführungsbeispiel das Erfassungssignal S vor dessen Modulation verwendet. Alternativ kann das modulierte Erfassungssignal S verwendet werden. In einer weiteren Ausführungsvariante können die empfangenen Erfassungssignale nach analoger/digitaler Umwandlung mit dem Referenzsignal Z, z.B. in der Datenverarbeitungseinheit 84, korreliert werden. Vor der Korrelation ist die Verwendung von Digitalfiltern denkbar, durch welche ein Messergebnis verbessert werden kann.

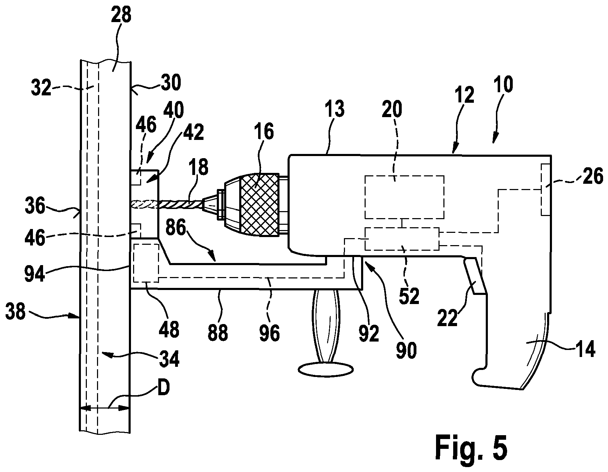

In Figur 5 ist ein Beispiel einer Elektrowerkzeugvorrichtung 40 für ein nicht erfinderisches Elektrowerkzeug 10 dargestellt. Hierbei werden gleich bleibende Bauteile des Elektrowerkzeugs 10 mit dem gleichen Bezugszeichen wie im Ausführungsbeispiel aus Figur 1 bezeichnet. Ferner werden Bauteile der Elektrowerkzeugvorrichtung 40, die in Bezug auf das vorhergehende Ausführungsbeispiel eine gleiche Funktion aufweisen, mit dem gleichen Bezugszeichen beziffert. Die Elektrowerkzeugvorrichtung 40 weist eine Elektrowerkzeugvorsatzeinheit 86 mit einem Grundkörper 88 auf, welcher über eine Kopplungseinheit 90 am Elektrowerkzeuggrundkörper 12 befestigt ist. Die Kopplungseinheit 90 weist eine Befestigungsschnittstelle 92 auf, über welche der Grundkörper 88 am Elektrowerkzeuggrundkörper 12 gekoppelt und von diesem gelöst werden kann. Im gekoppelten Zustand überbrückt der Grundkörper 88 einen von der Werkzeugaufnahme 16 festgelegten Werkzeugaufnahmebereich und setzt sich in einen Teilbereich 94 fort, der zum Anliegen an der Vorderseite 30 des Werkstücks 28 dient. Durch diesen Teilbereich 94 ist das Werkzeug 18 in Richtung auf das Werkstück 28 hindurchgeführt. In diesem Teilbereich 94 ist ferner die oben beschriebene Sensoreinheit 42 angeordnet. Diese weist zwei Sende- und Empfangsmittel 46 auf, welche beidseitig einer Öffnung zum Durchführen des Werkzeugs 18 angeordnet sind und mit der Signalbearbeitungseinheit 48 verbunden sind.

Die Kopplungseinheit 90 dient ferner zum Herstellen einer Datenverbindung mittels eines Drahtanschlusses 96 mit der Steuereinheit 52, die im Motorgehäuse 13 des Elektrowerkzeugs 10 angeordnet ist, und/oder zur Herstellung eines Stromversorgungsanschlusses zur Versorgung der Sensoreinheit 42 mit elektrischer Energie. Alternativ oder zusätzlich kann die Elektrowerkzeugvorsatzeinheit 86 eine eigene Stromversorgung aufweisen.

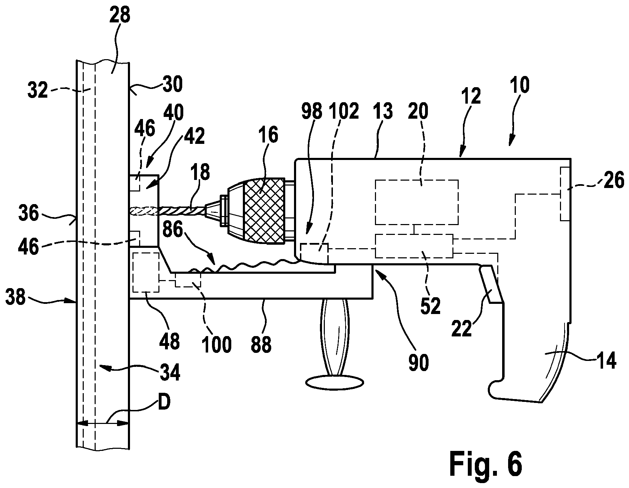

Figur 6 zeigt ein weiteres Beispiel einer Elektrowerkzeugvorrichtung 40 für ein nicht erfinderisches Elektrowerkzeug 10. Hierbei weist die Kopplungseinheit 90 ein Kopplungsmittel 98 auf, das zur Herstellung einer drahtlosen Datenverbindung zwischen der Sensoreinheit 42 und der Steuereinheit 52 im Motorgehäuse 13 vorgesehen ist. Das Kopplungsmittel 98 umfasst zwei Kommunikationsmittel 100, 102, wobei ein Kommunikationsmittel 100 an der Elektrowerkzeugvorsatzeinheit 86 montiert ist und mit der Sensoreinheit 42 in Wirkverbindung steht und ein Kommunikationsmittel 102 im Elektrowerkzeuggrundkörper 12 integriert ist und mit der Steuereinheit 52 in Wirkverbindung steht. Die drahtlose Datenverbindung über die Kommunikationsmittel 100, 102 kann z.B. über ein Infrarot- oder Bluetooth-Signal erfolgen.
In den obigen Ausführungsbeispielen hängt die Inbetriebnahme der Sensoreinheit 42 von der Inbetriebnahme des Elektrowerkzeugs 10 ab, indem die Sensoreinheit 42 mit dem Einschalten des Elektrowerkzeugs 10 automatisch in einen betriebsbereiten Zustand gebracht wird. In einem weiteren Anwendungsmodus kann die Sensoreinheit 42 durch den Bediener ein- und ausgeschaltet werden, wie z.B. durch eine Betätigung der Eingabeeinheit 59 (Figur 2c). In einem weiteren Anwendungsmodus der Elektrowerkzeugvorrichtung 40 kann ferner die Sensoreinheit 42 lediglich zur Anzeige von Informationen an den Bediener dienen, wobei die Sensoreinheit 42 von der Steuereinheit 52 in deren Steuerung des Elektromotors 20 entkoppelt ist. Anhand der angezeigten Informationen kann der Bediener z.B. über die Eingabeeinheit 59 bestimmte Funktionen des Elektrowerkzeugs 10 einstellen, mittels welcher Elektrowerkzeugbetriebsparameter eingestellt werden. Beispielweise kann der Bediener anhand der angezeigten Informationen die Drehzahl des Elektromotors 20 ändern, den Elektromotor 20 abschalten usw. Der Bediener kann mittels der Eingabeeinheit 59 zwischen den hier oben beschriebenen Anwendungsmodi umschalten.

## Patentansprüche

1. Elektrowerkzeug mit einem Elektrowerkzeuggrundkörper (12) und einer Elektrowerkzeugvorrichtung (40), wobei die Elektrowerkzeugvorrichtung eine Sensoreinheit (42) zur Erfassung zumindest einer von einem zu bearbeitenden Werkstück (28) abhängenden Kenngröße und eine Kopplungseinheit (51, 90) zur Kopplung der Sensoreinheit (42) an dem Elektrowerkzeuggrundkörper (12) aufweist, wobei die Sensoreinheit (42) dazu vorgesehen ist, eine Kenngröße für eine einem Bediener verborgene Übergangsstelle (34, 38) des Werkstücks (28) zu erfassen, wobei die Sensoreinheit (42) eine Signaleinheit (44) aufweist, die zur Erzeugung eines Hochfrequenzsignals, insbesondere eines Radarsignals mit einer Frequenz über 1 GHz, und zur Abstrahlung zumindest eines in einer Ebene (P.1, P.2) polarisierten Erfassungssignals (S.1, S.2) vorgesehen ist, **dadurch gekennzeichnet, dass** das Hochfrequenzsignal im ultrabreitbandigen Betrieb erzeugt ist, und dass die Sensoreinheit (42) in dem Elektrowerkzeuggrundkörper (12) angeordnet ist.

2. Elektrowerkzeug nach Anspruch 1, **dadurch gekennzeichnet, dass** die Sensoreinheit (42) ein Sensormittel (54) zur Erfassung einer Kenngröße aufweist, die von einer dem Bediener verborgenen Rückseite (36) des Werkstücks (28) abhängt.

3. Elektrowerkzeug nach Anspruch 1 oder 2, **dadurch gekennzeichnet, dass** die Sensoreinheit (42) ein Sensormittel (54) zur Erfassung einer Kenngröße aufweist, die von einem im Werkstück (28) angeordneten Fremdkörper (32) abhängt.

4. Elektrowerkzeug nach einem der vorhergehenden Ansprüche, **gekennzeichnet durch** eine Auswerteeinheit (50), die zur Ermittlung einer von der Übergangsstelle (34, 38) abhängenden Strecke (R, A) vorgesehen ist.

5. Elektrowerkzeug nach einem der vorhergehenden Ansprüche, **gekennzeichnet durch** eine Steuereinheit (52), die dazu vorgesehen ist, zumindest einen Elektrowerkzeugbetriebsparameter in Abhängigkeit einer von der Sensoreinheit (42) erfassten Kenngröße zumindest teilautomatisch zu steuern.

6. Elektrowerkzeug nach einem der vorhergehenden Ansprüche, **gekennzeichnet durch** eine akustische und/oder optische Signalausgabeeinheit (26), die dazu vorgesehen ist, einem Bediener eine von der Übergangsstelle (34, 38) abhängende Information auszugeben.

7. Elektrowerkzeug nach Anspruch 6, **dadurch gekennzeichnet, dass** die Signalausgabeeinheit (26) einen Betriebsmodus aufweist, in welchem eine Information über eine von der Übergangsstelle (34, 38) abhängende Strecke (A) ausgegeben wird.

8. Elektrowerkzeug nach einem der vorhergehenden Ansprüche, **gekennzeichnet durch** eine Eingabeeinheit (59) zum Eingeben einer Information für einen Elektrowerkzeugbetriebsparameter durch den Bediener.

## Claims

1. Electric tool having an electric tool base body (12) and an electric tool apparatus (40), wherein the electric tool apparatus has a sensor unit (42) for capturing at least one characteristic variable dependent on a workpiece (28) to be machined and a coupling unit (51, 90) for coupling the sensor unit (42) to the electric tool base body (12), wherein the sensor unit (42) is provided to capture a characteristic variable for a transition point (34, 38) of the workpiece (28) that is concealed from a user, wherein the sensor unit (42) has a signal unit (44) that is provided to generate a radio-frequency signal, in particular a radar signal at a frequency above 1 GHz, and to emit at least one capture signal (S.1, S.2) polarized in a plane (P.1, P.2), **characterized in that** the radio-frequency signal is generated in ultrawideband mode, and **in that** the sensor unit (42) is arranged in the electric tool base body (12).

2. Electric tool according to Claim 1, **characterized in that** the sensor unit (42) has a sensor means (54) for capturing a characteristic variable that is dependent on a back (36) of the workpiece (28) that is concealed from the user.

3. Electric tool according to Claim 1 or 2, **characterized in that** the sensor unit (42) has a sensor means (54) for capturing a characteristic variable that is dependent on a foreign body (32) arranged in the workpiece (28).

4. Electric tool according to one of the preceding claims, **characterized by** an evaluation unit (50) that is provided to ascertain a distance (R, A) dependent on the transition point (34, 38).

5. Electric tool according to one of the preceding claims, **characterized by** a control unit (52) that is provided to at least semiautomatically control at least one electric tool operating parameter on the basis of a characteristic variable captured by the sensor unit (42).

6. Electric tool according to one of the preceding claims, **characterized by** an audible and/or visual signal output unit (26) that is provided to output a piece of information dependent on the transition point (34, 38) to a user.

7. Electric tool according to Claim 6, **characterized in that** the signal output unit (26) has a mode of operation in which a piece of information about a distance (A) dependent on the transition point (34, 38) is output.

8. Electric tool according to one of the preceding claims, **characterized by** an input unit (59) for the user to input a piece of information for an electric tool operating parameter.

## Revendications

1. Outil électrique, comprenant un corps de base d'outil électrique (12) et un dispositif d'outil électrique (40), le dispositif d'outil électrique possédant une unité de détection (42) destinée à détecter au moins une grandeur caractéristique qui dépend d'une pièce (28) à usiner et une unité de couplage (51, 90) destinée à coupler l'unité de détection (42) au corps de base d'outil électrique (12), l'unité de détection (42) étant conçue pour détecter une grandeur caractéristique pour un point de transition (34, 38) de la pièce (28) qui est dissimulé à un opérateur, l'unité de détection (42) possédant une unité de signal (44) qui est conçue pour générer un signal à haute fréquence, notamment un signal radar ayant une fréquence supérieure à 1 GHz, et pour mettre au moins un signal de détection (S.1, S.2) polarisé dans un plan (P.1, P.2), **caractérisé en ce que** le signal à haute fréquence est généré dans un fonctionnement à ultra-large bande et **en ce que** l'unité de détection (42) est disposée dans le corps de base d'outil électrique (12).

2. Outil électrique selon la revendication 1, **caractérisé en ce que** l'unité de détection (42) possède un moyen de détection (54) destiné à détecter une grandeur caractéristique qui dépend d'un côté arrière (36) de la pièce (28) qui est dissimulé à l'opérateur.

3. Outil électrique selon la revendication 1 ou 2, **caractérisé en ce que** l'unité de détection (42) possède un moyen de détection (54) destiné à détecter une grandeur caractéristique qui dépend d'un corps étranger (32) disposé dans la pièce (28).

4. Outil électrique selon l'une des revendications précédentes, **caractérisé par** une unité d'interprétation (50) qui est conçue pour déterminer un parcours (R, A) qui dépend du point de transition (34, 38).

5. Outil électrique selon l'une des revendications précédentes, **caractérisé par** une unité de commande (52) qui est conçue pour commander de manière au moins partiellement automatique au moins un paramètre de fonctionnement d'outil électrique en fonction d'une grandeur caractéristique détectée par l'unité de détection (42).

6. Outil électrique selon l'une des revendications précédentes, **caractérisé par** une unité de délivrance de signal (26) sonore et/ou visuel qui est conçue pour délivrer à un opérateur des informations dépendantes du point de transition (34, 38).

7. Outil électrique selon la revendication 6, **caractérisé en ce que** l'unité de délivrance de signal (26) possède un mode de fonctionnement dans lequel est délivrée une information à propos d'un parcours (A) qui dépend du point de transition (34, 38).

8. Outil électrique selon l'une des revendications précédentes, **caractérisé par** une unité de saisie (59) destinée à saisir une information pour un paramètre de fonctionnement d'outil électrique par l'opérateur.
